# EUROPÄISCHE PATENTANMELDUNG

(11) **EP 4 550 591 A1**
(43) Veröffentlichungstag der Anmeldung: **07.05.2025**
(21) Anmeldenummer: 24207071.2
(22) Anmeldetag: 16.10.2024
(51) Int. Cl.: H01R 43/02, H01R 43/28, B23K 20/10, B23K 37/04, B23K 20/00

(54) **VORRICHTUNG ZUM POSITIONIEREN VON ELEKTRISCHEN LEITUNGEN**

(30) Priorität: 03.11.2023 DE 102023130432
(71) Anmelder: Lisa Dräxlmaier GmbH, 84137 Vilsbiburg (DE)
(72) Erfinder: KAPFENBERGER, Thomas, 84036 Kumhausen (DE); GOTTHARDT, Andreas, 84030 Ergolding (DE)

(57) **Zusammenfassung**

Vorgeschlagen wird eine Vorrichtung zum Positionieren von Enden einer Mehrzahl von elektrischen Leitungen in einer Schweißmaschine, aufweisend ein Anschlagselement konfiguriert zum Ausrichten von Enden der Mehrzahl von elektrischen Leitungen an dem Anschlagselement, eine Führungseinheit, konfiguriert zum Führen der Enden der Mehrzahl von elektrischen Leitung in Richtung des Anschlagselementes, wobei die Führungseinheit ferner konfiguriert ist, um sich von dem Anschlagselement wegzubewegen, um die Enden der Mehrzahl von elektrischen Leitungen in die Schweißmaschine an einer bestimmungsgemäßen Schweißposition einzubringen.

## Beschreibung

### Technisches Gebiet

Die vorliegende Erfindung betrifft eine Vorrichtung zum Positionieren von elektrischen Leitungen in einer Schweißmaschine. Zudem betrifft die Erfindung ein Verfahren zum Positionieren von elektrischen Leitungen in einer Schweißmaschine.

### Stand der Technik

Bei zu schweißenden Leitungen, insbesondere beim Litzenschweißen, ist es wichtig, dass alle Leitungen korrekt ausgerichtet im Schweißbereich einer Schweißmaschine positioniert werden. Hierzu richtet der Bediener der Schweißmaschine die Leitungen außerhalb der Schweißmaschine manuell aus. Anschließend werden die ausgerichteten Leitungen von dem Bediener in den Schweißbereich der Schweißmaschine eingeführt. Zusätzlich muss der Schweißprozess mit der zweiten Hand gestartet werden. Die Schwierigkeit liegt darin, dass die Schweißmaschine über dem Baubrett frei beweglich ist und aufgrund dessen mit der zweiten Hand zusätzlich in Position gehalten werden muss. Ein mechanischer Anschlag dient der Unterstützung des Bedieners beim Halten der Leitungen, sodass diese nicht durch die Schweißmaschine hindurch geschoben werden. Durch die Bauteilgeometrie eben dieses Anschlages kann es jedoch dazu kommen, dass die Leitungen nicht in der korrekten Ausrichtung verbleiben. Stattdessen können sich Leitungen verschieben und durchschieben. Ferner ist der Schweißbereich durch den Anschlag verdeckt und nicht einsehbar, was eine Korrektur erschwert.

Es besteht daher der Bedarf nach einer verbesserten Vorrichtung zum Positionieren von Leitungen für eine Schweißmaschine, insbesondere zum Einbringen in eine Schweißmaschine, welche kostengünstig anzuwenden ist und zuverlässig die Leitungen Ausrichten kann.

### Beschreibung der Erfindung

Eine Aufgabe der Erfindung ist es daher, unter Einsatz konstruktiv möglichst einfacher Mittel eine verbesserte Vorrichtung zum Ausrichten von Enden von einer Mehrzahl von elektronischen Leitungen bereitzustellen. Diese Vorrichtung soll ein einfaches, zuverlässiges und reproduzierbares Ausrichten von elektronischen Leitungen ermöglichen.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Die beschriebenen Ausführungsformen gelten gleichermaßen für das Verfahren zum Positionieren von Enden von einer Mehrzahl von elektrischen Leitungen in einer Schweißmaschine. Synergetische Effekte können aus verschiedenen Kombinationen der Ausführungsformen entstehen, auch wenn sie nicht im Detail beschrieben sind.

Gemäß einem Aspekt der Erfindung wird eine Vorrichtung zum Positionieren von Enden einer Mehrzahl von elektrischen Leitungen in einer Schweißmaschine bereitgestellt. Die Vorrichtung weist ein Anschlagselement auf, konfiguriert zum Anordnen von Enden der Mehrzahl von elektrischen Leitungen an dem Anschlagselement, eine Führungseinheit konfiguriert zum Führen der Enden der Mehrzahl von elektrischen Leitung in Richtung des Anschlagelementes, wobei die Führungseinheit ferner konfiguriert ist, um sich von dem Anschlagselement wegzubewegen, um die Enden der Mehrzahl von elektrischen Leitungen in die Schweißmaschine an einer bestimmungsgemäßen Schweißposition einzubringen.

In anderen Worten dient die Vorrichtung dazu eine Mehrzahl von elektrischen Leitungen, insbesondere deren Enden, für einen Schweißprozess korrekt auszurichten und die korrekt ausgerichteten Enden der elektrischen Leitungen an einer bestimmungsgemäßen Schweißposition einzubringen. Insbesondere kann die Führungseinheit derart eingerichtet sein, dass sie die Enden der Mehrzahl von elektrischen Leitungen nach dem Ausrichten an dem Anschlagselement in die Schweißmaschine an der bestimmungsgemäßen Schweißposition einbringt. Unter dem Begriff einer bestimmungsgemäßen Schweißposition kann unter anderem verstanden werden, dass zumindest zu verschweißende Enden von der Mehrzahl von elektrische Leitungen in einem Schweißraum der Schweißmaschine angeordnet werden und miteinander verschweißt werden können. Durch das Ausrichten der Enden der Mehrzahl von elektrischen Leitungen liegen alle Leitungen gebündelt und im gleichen Abstand an dem Anschlagselement an und können somit korrekt ausgerichtet in die Schweißmaschine eingebracht werden. Durch die Vorrichtung wird das Einlegen der elektronischen Leitungen in die Schweißmaschine zumindest teilweise automatisiert und der manuelle Vorgang des Einlegens in den Schweißraum der Schweißmaschine für den Anwender erleichtert. Ferner kann durch die mechanische Konstruktion sichergestellt werden, dass sich die Positionen der elektrischen Leitungen während des Ausrichtens und des Einlegens in die Schweißmaschine nicht ändern. Mittels der erfindungsgemäßen Vorrichtung kann eine Nacharbeit der elektronischen Leitungen verringert werden, da eine genauere Ausrichtung mittels des Anschlagselements erfolgt, was wiederum eine Fehlerminimierung mit sich bringt. Ferner ermöglicht die Vorrichtung eine einfachere Bedienung und verbessert somit die ergonomischen Arbeitsverhältnisse für den Anwender. Weiterhin kann die Taktzeit des Schweißvorganges reduziert werden da eine optimale Ausrichtung mittels der erfindungsgemäßen Vorrichtung erfolgen kann und eine Nacharbeit verringert wird. Das erfindungsgemäße Anschlagselement ist dabei insbesondere außerhalb eines Schweißraumes der Schweißmaschine angeordnet und die Führungseinheit ist konfiguriert und ausgerichtet die Enden der Mehrzahl von elektronischen Leitungen, welche außerhalb des Schweißraums mittels des Anschlagselement ausgerichtet werden in einem ausgerichteten Zustand in den Innenraum der Schweißmaschine zu bewegen.

Insbesondere kann die Vorrichtung bei einem Ultraschalllitzenschweißen verwendet werden.

Unter dem Begriff elektrische Leitungen können insbesondere isolierte elektrische Leitungen, ferner isolierte Kabelstränge, verstanden werden, welche für das Schweißen in der Schweißmaschine an zumindest einem Ende ab isoliert werden. Dieses zumindest eine Ende soll mit den anderen nicht mehr isolierten Enden der weiteren elektrischen Leitungen aus der Mehrzahl von elektrischen Leitungen zusammengeschweißt werden.

In einer Ausführungsform der Erfindung kann die Führungseinheit entlang einer Ebene senkrecht zu einer Oberfläche des Anschlagselementes bewegbar sein und/oder entlang einer Ebene parallel zu der Oberfläche des Anschlagselementes bewegbar sein. Die Oberfläche des Anschlagselementes ist dabei jene Oberfläche, an welcher die Enden der Mehrzahl von elektrischen Leitungen ausgerichtet werden. Anders ausgedrückt kann die Führungseinheit entlang einer Längsrichtung der Mehrzahl von elektrischen Leitungen in Richtung des Anschlagselementes bewegbar sein und/oder entlang einer Achse senkrecht zur Längsrichtung der Mehrzahl von elektrischen Leitungen bewegbar sein. Insbesondere kann die Bewegung der Führungseinheit entlang einer Längsrichtung der elektrischen Leitungen alternativ zu einer Bewegung entlang einer Achse senkrecht der Längsrichtung ausgeführt werden. Andererseits kann die Führungseinheit auch derart konfiguriert sein das sie in beide Bewegungsrichtungen bewegbar/verschiebbar ist.

Beispielsweise kann die Führungseinheit Linearschlitten aufweisen welche eine Bewegung in eine und oder beide der oben genannten Bewegungsrichtungen umsetzen. Dabei ist die erfindungsgemäße Vorrichtung nicht auf den Linearschnitten begrenzt auch andere Elemente/Bauteile zur Bewegungsübertragung können angewandt werden, wie zum Beispiel Kugellager, Rundführungen oder ähnliches.

In einer Ausführungsform der Erfindung kann die Führungseinheit zwischen einer ersten Position und einer zweiten Position hin und her bewegt werden, wobei in der ersten Position die Enden der Mehrzahl von elektrischen Leitungen mittels der Vorrichtung außerhalb der Schweißmaschine angeordnet sind, wobei in der zweiten Position die Enden der Mehrzahl von elektrischen Leitungen mittels der Vorrichtung zumindest teilweise innerhalb der Schweißmaschine angeordnet sind. Dadurch können zumindest die zu verschweißenden Enden der Mehrzahl von elektrischen Leitungen innerhalb der Schweißmaschine angeordnet werden. Insbesondere kann unter der ersten Position eine Position verstanden werden, in welcher die Enden der Mehrzahl von elektrischen Leitungen an das Anschlagselement angebracht werden und mit diesen ausgerichtet werden. Diese erste Position befindet sich außerhalb eines Schweißraumes, oder auch als Schweißbereich bezeichnet, der Schweißmaschine. Dadurch kann eine Ausrichtung der Enden der Mehrzahl von elektrischen Leitungen an bzw. in der Nähe des Schweißraumes erfolgen, gleichzeitig wird eine Kontrolle der ausgerichteten Enden vor dem Verschweißen in der Schweißmaschine ermöglicht. Ferner kann unter der zweiten Position eine Position verstanden werden, in welcher die Mehrzahl von elektrischen Leitungen, bzw. deren zu verschweißenden Enden, in einem Schweißraum innerhalb der Schweißmaschine angeordnet sind und miteinander verschweißt werden können. Die Führungseinheit kann zwischen diesen beiden Positionen verfahren werden.

In einer Ausführungsform der Erfindung kann das Anschlagselement nach dem Ausrichten der Enden der Mehrzahl von elektrischen Leitungen an dem Anschlagselement von der Mehrzahl von elektrischen Leitungen weg bewegbar sein. Anders ausgedrückt kann das Anschlagselement gegenüber der Führungseinheit wegbewegbar und von den ausgerichteten Enden der Mehrzahl von elektrischen Leitungen wegbewegbar sein. Nach dem Ausrichten der Enden der Mehrzahl von elektrischen Leitungen kann das Anschlagselement von den elektrischen Leitungen wegbewegt werden, was gleichzeitig ein Wegbewegen von der Führungseinheit umfasst. Das Wegbewegen kann insbesondere ein Wegfahren, Wegklappen (oder eine Kombination aus beiden) des Anschlagselementes in eine der Führungseinheit gegenüberliegende Richtung umfassen. Das Anschlagselement kann gegenüber der Führungseinheit bewegbar sein, d.h. zum Beispiel in einer Richtung senkrecht zur Längsrichtung der Mehrzahl von elektrischen Leitungen nach oben, unten oder auch seitlich. Damit kann das Anschlagselement gegenüber dem Führungselement ausgerichtet werden. Andererseits kann das Anschlagselement auch von der Mehrzahl von elektrischen Leitungen wegbewegt war sein. Das heißt es kann in Längsrichtung der elektrischen Leitungen verschiebbar sein, sodass es von der Führungseinheit und/oder von dem Führungselement entlang der Längsrichtung der elektrischen Leitungen wegbewegt wird. Beide Merkmale sind miteinander kombinierbar. Durch das Entfernen des Anschlagselement weg von den Enden der elektrischen Leitungen können bei dem Verlagern der elektrischen Leitungen durch die Führungseinheit Kratzer an dem Anschlagselement vermieden werden. Dies gewährleistet eine unbeeinträchtigte Oberfläche des Anschlagselements, was zum Beispiel bei dem weiteren Ausführungsbeispiel des transparenten Anschlagselementes für eine freie Sicht auf die elektrischen Leitungen von Vorteil ist.

In einer Ausführungsform der Erfindung kann die Vorrichtung ferner eine Grundplatte aufweisen, an welcher das Anschlagselement und die Führungseinheit befestigt sind. Die Grundplatte kann entsprechende Ausnehmung und Aussparungen aufweisen, welche es ermöglichen durch Bewegen der Führungseinheit die elektrischen Leitungen von dem Anschlagselement, d.h. von außerhalb der Schweißmaschine, in den Innenraum der Schweißmaschine zu bewegen.

In einer Ausführungsform der Erfindung kann die Vorrichtung ferner ein Führungselement angeordnet an der Führungseinheit aufweisen. Das Führungselement kann konfiguriert sein, die Enden der Mehrzahl von elektrischen Leitungen nach dem Anordnen an dem Anschlagselement einzuklemmen. Die Mehrzahl von elektrischen Leitungen können manuell durch einen Benutzer in dem Führungselement eingeklemmt werden. Vorteilhafterweise werden durch ein Einklemmen die ausgerichteten Enden der Mehrzahl von elektrischen Leitungen gesichert und ein Verrutschen verhindert. Beispielsweise kann das Führungselement so konfiguriert sein, dass die Mehrzahl von elektrischen Leitungen mittels einer Presspassung in dem Führungselement fixiert und eingeklemmt werden. Zum Beispiel kann das Führungselement ferner derart geformt sein, dass die Mehrzahl von elektrischen Leitungen durch das Führungselement schiebbar sind entlang der Längsachse der elektrischen Leitungen und durch ein Eindrücken in das Führungselement, in eine Richtung senkrecht zur Längsachse der elektrischen Leitungen, werden diese in dem Führungselement eingeklemmt.

In einer Ausführungsform der Erfindung kann das Führungselement eine erste Ausnehmung zum Aufnehmen der Mehrzahl von elektrischen Leitungen aufweisen, welche erste Ausnehmung einen Führungskanal durch das Führungselement für die Mehrzahl von elektrischen Leitungen ausbildet. Dies kann ein gezieltes Führen der Mehrzahl von elektrischen Leitungen ermöglichen. Weiterhin kann ein Verrutschen der elektrischen Leitungen bei einer Bewegung entlang des Führungskanals verringert werden. Beispielsweise ist die erste Ausnehmung als ein Durchgangsloch durch das Führungselement ausgebildet. Anderseits kann die erste Ausnehmung auch eine U-förmige Ausnehmung an einer Seite des Führungselementes sein. Die erste Ausnehmung kann ferner derart konfiguriert sein, dass die Mehrzahl von elektrischen Leitungen manuell durch einen Benutzer in der ersten Ausnehmung einklemmbar ist.

In einer Ausführungsform der Erfindung kann das Führungselement derart konfiguriert sein, dass die Mehrzahl von elektrischen Leitungen automatisch einklemmbar ist. Das Ausrichten der elektronischen Leitungen und deren anschließendes Einbringen in einen Schweißraum der Schweißmaschine kann dadurch zumindest teilweise automatisiert und der manuelle Vorgang des Einlegens in den Schweißraum der Schweißmaschine für den Anwender erleichtert werden.

In einer Ausführungsform der Erfindung kann das Führungselement zusätzlich zu der oben genannten Ausführungsform eine zweite Ausnehmung aufweisen, wobei die zweite Ausnehmung konfiguriert sein kann zum Aufnehmen eines Fingers eines Benutzers zur manuellen Unterstützung der Mehrzahl von elektrischen Leitungen. Die zweite Ausnehmung kann benachbart zur ersten Ausnehmung angeordnet sein. Insbesondere kann die erste Ausnehmung über der zweiten Ausnehmung angeordnet sein, senkrecht zur Längsrichtung der Mehrzahl von elektrischen Leitungen gesehen. Damit können die Mehrzahl von elektrischen Leitungen durch die erste Ausnehmung geführt werden und während des Schweißprozesses kann der Anwender bzw. der Benutzer die Mehrzahl von elektrischen Leitungen mittels der zweiten Ausnehmung stützen. Damit wird ein Verrutschen der Mehrzahl von elektrischen Leitungen während eines Schweißprozesses verhindert und die Position der Mehrzahl von elektrischen Leitungen kann einfach beibehalten werden. Ferner kann die Unterstützung ein Einschwenken in den Schweißraum der Schweißmaschine umfassen. Die zweite Ausnehmung kann ferner auch zum Einklemmen der Mehrzahl von elektrischen Leitungen dienen, wobei das Einklemmen sowohl manuell, wie oben geschildert, durch einen Benutzer erfolgen kann, als auch automatisch erfolgen kann.

In einer Ausführungsform der Erfindung kann das Anschlagselement ein transparentes Material aufweisen. Durch ein transparentes Material kann eine bessere Sicht auf die Mehrzahl von elektrischen Leitungen gewährleistet werden. Für den Anwender wird somit die Handhabung der elektrischen Leitung und deren Einführen und die Überprüfung der korrekten Ausrichtung der Mehrzahl von elektrischen Leitungen an dem Anschlagselement erleichtert. Zusätzlich und/oder alternativ kann das Anschlagselement auch jedes andere Material aufweisen und ist nicht auf ein transparentes Material beschränkt.

In einer Ausführungsform der Erfindung kann die Mehrzahl von elektrischen Leitungen, eine Mehrzahl von Litzen aufweisen. In anderen Worten kann die Mehrzahl von elektrischen Leitung als eine Mehrzahl von Litzen angesehen werden. Insbesondere können die Mehrzahl von elektrischen Leitungen teilweise ab-isolierte elektrische Leitungen bestehend aus einer Mehrzahl von Litzen sein, wobei jeweils eine elektrische Leitung aus eine Mehrzahl von elektrischen Litzen bestehen kann und/oder wobei jede der Mehrzahl von elektrischen Leitungen eine jeweilige Litze darstellt.

In einer Ausführungsform der Erfindung kann das Anschlagselement zumindest drei aneinander angrenzende Flächen zur Aufnahme der Mehrzahl von elektrischen Leitungen aufweisen, welche einen teilweise geöffneten Raum aufspannen ähnlich einem Schweißraum in der Schweißmaschine. Beispielsweise grenzen die drei Flächen an zumindest einer Ecke aneinander an, wobei eine erste Fläche eine Unterseite bildet, eine zweite Fläche eine von der Unterseite senkrecht nach obenstehende erste Seitenwand ausbildet und eine dritte Fläche eine von der Unterseite senkrecht nach obenstehende zweite Seitenwand ausbildet. Die erste und die zweite Seitenwand können an einer Kante senkrecht, z.B. im rechten Winkel, aufeinander stehen und miteinander in Kontakt sein. Insbesondere ist die Form des Anschlagselements zumindest teilweise an die Form des Schweißraums in der Schweißmaschine angepasst, sodass die Mehrzahl von elektrischen Leitung bereits mittels des Anschlagselement so ausgerichtet werden können, wie sie auch in dem Schweißraum zum Schweißen vorliegen würden bzw. sollen. Ferner kann wenigstens eine oder mehrere der drei Flächen Einführschrägen aufweisen. Insbesondere können alle den geöffneten Raum bildenden Flächen Einführschrägen aufweisen. Damit kann ein Einführen der Enden der Mehrzahl von elektrischen Leitungen verbessert werden.

In einer Ausführungsform der Erfindung, kann die Vorrichtung ferner eine Sensoreinrichtung aufweisen, welche konfiguriert ist zu Detektieren, ob die Enden der Mehrzahl von elektrischen Leitungen in der bestimmungsgemäßen Schweißposition angeordnet sind. Es kann als Sensor jeder kapazitiv, induktiv oder mechanisch arbeitende Sensor eingesetzt werden. Beispielsweise kann ein pneumatischer Zylinder als Sensor eingesetzt werden, welche die bestimmungsgemäße Schweißposition detektiert. Dadurch wird sichergestellt, dass sich die ausgerichteten Enden der Mehrzahl von elektrischen Leitungen an der korrekten, bestimmungsgemäßen, Position zum Schweißen befinden. Die Fehleranfälligkeit des Schweißvorganges kann dadurch reduziert werden.

In einer Ausführungsform der Erfindung kann die Vorrichtung ferner eine Steuerung aufweisen, welche konfiguriert ist, um ein Schweißen der Enden der Mehrzahl von elektrischen Leitungen in der Schweißmaschine automatisch auszulösen, wenn über die Sensoreinrichtung detektiert wurde, dass die Enden der Mehrzahl von elektrischen Leitungen in der bestimmungsgemäßen Schweißposition angeordnet sind. Damit kann ein automatischer Start des Schweißvorganges realisiert werden. Mittels des Sensors und der Steuerung des Schweißens kann eine Taktzeit des Schweißes von elektronischen Leitungen reduziert werden.

Die bestimmungsgemäße Schweißposition kann eine Endposition in dem Schweißraum der Schweißmaschine sein, in welcher Position die Mehrzahl von elektrischen Leitungen derart angeordnet sind, sodass ein Schweißprozess gestartet werden kann.

Gemäß einem Aspekt der Erfindung wird ein Verfahren zum Positionieren Enden von einer Mehrzahl von elektrischen Leitungen in einer Schweißmaschine beschrieben. Das Verfahren weist folgende Schritte auf: Führen der Enden der Mehrzahl von elektrischen Leitungen mittels einer Führungseinheit in Richtung eines Anschlagselementes, Ausrichten der Enden der Mehrzahl von elektrischen Leitungen an dem Anschlagselement, Einbringen der Enden der Mehrzahl von elektrischen Leitungen in der Schweißmaschine an einer bestimmungsgemäßen Schweißposition mittels der Führungseinheit.

In anderen Worten, kann das Verfahren beispielsweise wie folgt ablaufen. Ein Anwender sammelt die einzelnen elektrischen Leitungen auf. Von jeder der einzelnen Leitungen wird ein Endstück ab isoliert, sodass der elektrische Leiter freiliegt. Die Mehrzahl an elektrischen Leitungen werden mithilfe des Anschlagselements und des Führungselements in der Vorrichtung positioniert. Dieses Positionieren erfolgt mittels eines Führens der Enden der Mehrzahl von elektrischen Leitung in Richtung des Anschlagselements. Anschließend werden die Enden der Mehrzahl von elektrischen Leitungen an dem Anschlagselement ausgerichtet. Durch beispielsweise einen transparenten Endanschlag wird dem Bedienung nochmals ermöglicht das Bündel aus den Mehrzahl von elektronischen Leitungen visuell auf korrekte Länge zu überprüfen. Das Bündel aus der Mehrzahl von elektrischen Leitungen kann beispielsweise mittels des Führungselementes eingeklemmt werden, um ein verrutschen zu verhindern. Die ausgerichteten Enden der Mehrzahl von elektrischen Leitungen werden in einen Schweißraum der Schweißmaschine eingebracht mittels bewegen der Führungseinheit. Dort werden sie an der bestimmungsgemäßen Schweißposition mittels der Führungseinheit eingebracht. Anschließend können weitere Verfahrensschritte ausgeführt werden. Beispielsweise kann nach Erreichen der bestimmungsgemäßen Schweißposition eine Sensoreinheit den Schweißprozess der Schweißmaschine automatisch auslösen.

Weiterhin soll darauf hingewiesen werden, dass alle ein Verfahren betreffende Ausführungsformen der vorliegenden Erfindung in der beschriebenen Reihenfolge der Schritte ausgeführt werden können. Trotzdem muss das nicht die einzigmögliche und erforderliche Reihenfolge der Schritte des Verfahrens sein. Die hierin beschriebenen Verfahren können in einer anderen Reihenfolge der offenbarten Schritte ausgeführt werden, ohne von der entsprechenden Ausführungsform des Verfahrens abzuweichen, sofern nicht nachfolgend ausdrücklich das Gegenteil erwähnt wird.

Gemäß einem weiteren Aspekt der Erfindung wird eine Schweißmaschine zum Verschweißen einer Mehrzahl von elektrischen Leitungen beschrieben. Die Schweißmaschine umfasst eine Vorrichtung gemäß den hierin beschriebenen Ausführungsformen betreffend eine Vorrichtung zum Positionieren von Enden einer Mehrzahl von elektrischen Leitungen in einer Schweißmaschine. Insbesondere ist die Schweißmaschine dazu geeignet, Enden der Mehrzahl von elektrischen Leitungen unter Verwendung der hierin beschriebenen Vorrichtung zu verschweißen. Die erfindungsgemäße Schweißmaschine ermöglicht es, dass das Ausrichtung der Mehrzahl von elektronischen Leitungen in die Schweißmaschine zumindest teilweise automatisiert wird und der manuelle Vorgang des Einlegens in den Schweißraum der Schweißmaschine für den Anwender erleichtert wird.

Weitere Merkmale, Vorteile und Anwendungsmöglichkeiten der Erfindung ergeben sich aus der nachfolgenden Beschreibung von vorteilhaften Ausführungsformen und den begleitenden Figuren.

### Kurze Figurenbeschreibung

Nachfolgend wird ein vorteilhaftes Ausführungsbeispiel der Erfindung unter Bezugnahme auf die begleitenden Figuren erläutert. Es zeigen:
Figur 1 zeigt eine Vorrichtung zum Positionieren von elektrischen Leitungen gemäß einer Ausführungsform der Erfindung.
Figur 2 zeigt eine Vorrichtung zum Positionieren von elektrischen Leitungen in einer anderen Position als in Figur 1 gemäß einer Ausführungsform der Erfindung.
Figur 3 zeigt ein Anschlagselement der erfindungsgemäßen Vorrichtung gemäß einer Ausführungsform der Erfindung.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

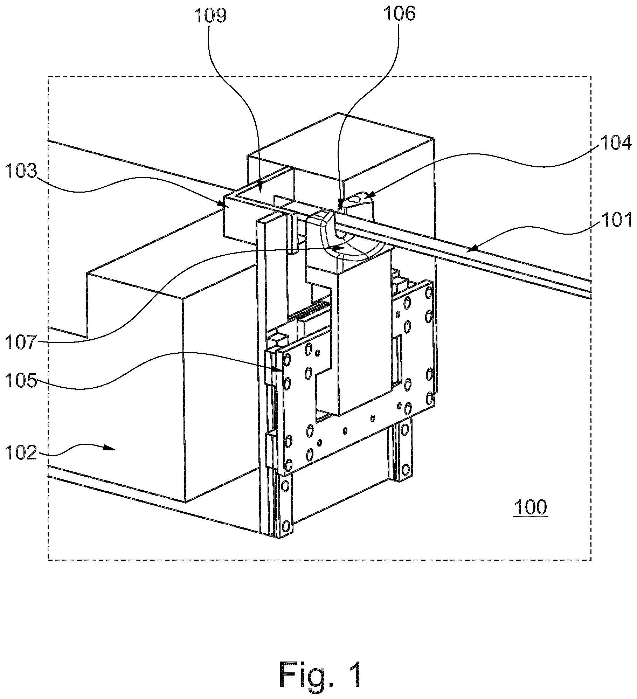

Fig. 1 zeigt eine Vorrichtung 100 zum Positionieren von elektrischen Leitungen 101 gemäß einer Ausführungsform der Erfindung. Die Vorrichtung 100 weist dabei ein Anschlagselement 103, ein Führungselement 104, und eine Führungseinheit 105 auf. Die Mehrzahl von elektrischen Leitungen 101 werden durch das Führungselement 104 bis zum Anschlagselement 103 geführt und gestützt. An dem Anschlagselement 103 liegen die elektrischen Leitungen 101 mit einer Seite, senkrecht zur Längserstreckungsrichtung der elektrischen Leitungen 101, an. Dadurch wird eine gleichmäßige Ausrichtung der Mehrzahl von elektrischen Leitung 101 gewährleistet. Das Anschlagselement 103 ist in Fig. 1 derart angeordnet, dass zumindest eine Seitenfläche, welche sich in Längsrichtung der elektrischen Leitungen 101 erstreckt an der Vorrichtung 100 befestigt ist. Ferner erstreckt sich eine zweite Fläche 109, welche eine erste Seitenwand ausbildet, quer zur Längsrichtung der elektrischen Leitungen 101, welche senkrecht zur ersten Fläche, d.h. der Unterseite, und an der ersten Fläche angeordnet ist. Dabei fungiert die zweite Fläche 109 als Anschlag bzw. Oberfläche, mit welcher Oberfläche die elektrischen Leitungen 101 in Kontakt kommen können. In anderen Worten kann das Anschlagselement 103 als ein rechter Winkel ausgeführt sein. Als Führungseinheit 105 sind vorliegend Führungsschienen dargestellt, insbesondere Linearschlitten. Alternativ können hier auch Kugellager, Rundführungen oder Ähnliches eingesetzt werden. In Fig. 1 werden die elektrischen Leitungen 101 außerhalb der Schweißmaschine 102 mittels des Anschlagselement 103 ausgerichtet. Anschließend kann ein Anwender die ausgerichteten elektrischen Leitungen 101 mittels der Führungseinheit 105 und mittels des daran angeordneten Führungselementes 104 in die zweite Position, d.h. in den Innenraum der Schweißmaschine 102 bewegen. Das Führungselement 104 weist eine erste Ausnehmung 106 auf, welche in der vorliegenden Figur U-förmig ausgebildet ist, sodass die elektrischen Leitungen 101 zum einen von oben in das "U" eingelegt werden können oder auch von der Seite durch die zwei Seiten des "U" hindurchgeschoben werden können.

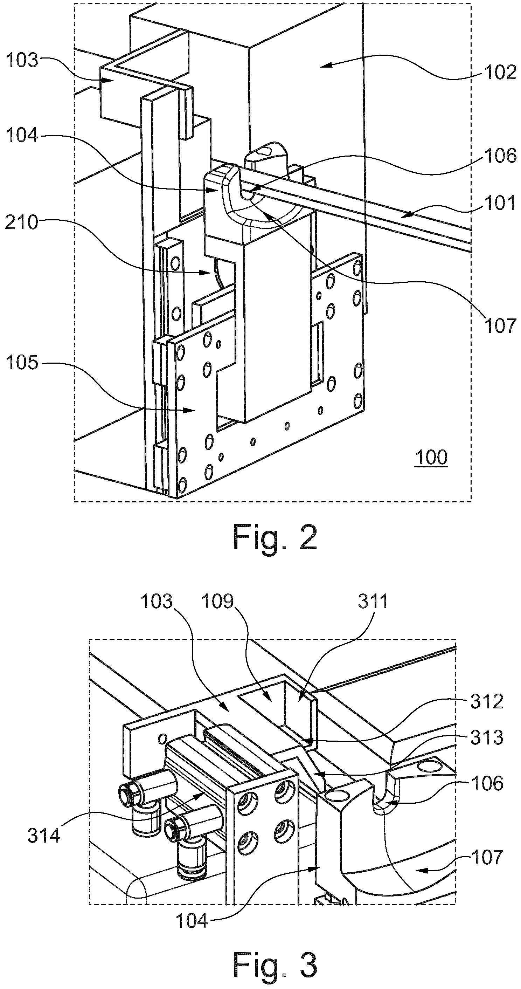

Fig. 2 zeigt eine Vorrichtung 100 zum Positionieren von elektrischen Leitungen 101 in einer anderen Position als in Figur 1 gemäß einer Ausführungsform der Erfindung. In dieser Figur ist die Bewegung der elektrischen Leitungen 101 in die Schweißmaschine 102 dargestellt. Zu erkennen ist, dass das Einführen in die Schweißmaschine 102 ein Durchfahren, bzw. Nachfahren einer sogenannten S-Form 210 erfordert, was mittels der Führungseinheit 105 realisiert werden kann. Das bewegen der elektrischen Leitungen 101 mittels der Führungseinheit 105 kann der Anwender mittels der zweiten Ausnehmung 107 an dem Führungselement 104 unterstützen, um somit auch die elektrischen Leitungen 101 in ihrer Position zu halten.

Fig. 3 zeigt ein Anschlagselement 103 der erfindungsgemäßen Vorrichtung 100 gemäß einer Ausführungsform der Erfindung. Das Anschlagselement 103 weist zumindest drei aneinander angrenzende Flächen 109, 311, 312 zur Aufnahme der Enden der Mehrzahl von elektrischen Leitungen 101 auf, welche einen teilweise geöffneten Raum aufspannen ähnlich einem Schweißraum in der Schweißmaschine. Die drei Flächen 109, 311, 312 grenzen an zumindest einer Ecke aneinander an. Eine erste Fläche 312 bildet eine Unterseite, eine zweite Fläche 109 bildet eine von der Unterseite senkrecht nach obenstehende erste Seitenwand und eine dritte Fläche 311 bildet eine von der Unterseite senkrecht nach obenstehende zweite Seitenwand aus, wobei die erste und die zweite Seidenwand 109, 311 an einer Kante senkrecht, z.B. im rechten Winkel, aufeinander stehen und miteinander in Kontakt sind. Insbesondere ist die Form des Anschlagselements 103 zumindest teilweise an die Form des Schweißraums in der Schweißmaschine angepasst, sodass die Enden der Mehrzahl von elektrischen Leitung 101 bereits mittels des Anschlagselement 103 so ausgerichtet werden können, wie sie auch in dem Schweißraum zum Schweißen vorliegen würden bzw. sollen. Das Anschlagselement 103 kann optional eine weitere schräge Fläche 313 in einer Ebene parallel gegenüber der zweiten Fläche 311 aufweisen. Diese schräge Fläche 313 kann als Führung für die elektrischen Leitungen 101 dienen, sodass die Mehrzahl von elektrischen Leitungen 101 besser an dem Anschlagselement 103 zum Anliegen kommen. Ferner sind der Figur 3 Befestigungsmittel 314 dargestellt, welche das Anschlagselement 103 mit der Führungseinheit 105 verbinden. Beispielsweise kann das Anschlagselement 103 mittels der Befestigungsmittel 314 an der Grundplatte, welche die S-Form 210 aufweist befestigt sein, wobei an derselben Grundplatte die Führungseinheit 105 angebracht ist. Als Befestigungsmittel 314 können beispielsweise Schienen und Schrauben oder ähnliches dienen.

Obwohl die Erfindung in den Zeichnungen und der vorstehenden Beschreibung illustriert und detailliert beschrieben wurde, sind diese Zeichnungen und Beschreibungen als illustrativ oder beispielhaft zu verstehen und nicht als einschränkend zu betrachten. Die Erfindung ist nicht auf die offenbarten Ausführungsformen beschränkt. Andere Variationen der offenbarten Ausführungsformen können von den Fachleuten, die die beanspruchte Erfindung ausführen, anhand der Zeichnungen, der Offenbarung und der abhängigen Ansprüche verstanden und ausgeführt werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHENLISTE

- 100: Vorrichtung
- 101: elektrische Leitungen
- 102: Schweißmaschine
- 103: Anschlagselement
- 104: Führungselement
- 105: Führungseinheit
- 106: erste Ausnehmung
- 107: zweite Ausnehmung
- 109: zweite Fläche
- 210: S-Form
- 311: dritte Fläche
- 312: erste Fläche
- 313: schräge Fläche
- 314: Befestigungsmittel

## Patentansprüche

1. Vorrichtung (100) zum Positionieren von Enden einer Mehrzahl von elektrischen Leitungen (101) in einer Schweißmaschine (102), aufweisend
ein Anschlagselement (103), konfiguriert zum Ausrichten von Enden der Mehrzahl von elektrischen Leitungen (101) an dem Anschlagselement (103),
eine Führungseinheit (105), konfiguriert zum Führen der Enden der Mehrzahl von elektrischen Leitungen (101) in Richtung des Anschlagselementes (103),
wobei die Führungseinheit (105) ferner konfiguriert ist, um sich von dem Anschlagselement (103) wegzubewegen, um die Enden der Mehrzahl von elektrischen Leitungen (101) in die Schweißmaschine (102) an einer bestimmungsgemäßen Schweißposition einzubringen.

2. Vorrichtung gemäß Anspruch 1,
wobei die Führungseinheit (105) entlang einer Ebene senkrecht zu einer Oberfläche des Anschlagselementes (103) bewegbar ist und/oder entlang einer Ebene parallel zu der Oberfläche des Anschlagselementes (103) bewegbar ist,
wobei die Oberfläche des Anschlagselementes (103), jene Oberfläche ist an welcher die Enden der Mehrzahl von elektrischen Leitungen (101) ausgerichtet werden.

3. Vorrichtung gemäß einem der Ansprüche 1 oder 2,
wobei die Führungseinheit (105) zwischen einer ersten Position und einer zweiten Position bewegbar ist,
wobei in der ersten Position die Enden der Mehrzahl von elektrischen Leitungen (101) mittels der Vorrichtung außerhalb der Schweißmaschine (102) angeordnet sind,
wobei in der zweiten Position die Enden der Mehrzahl von elektrischen Leitungen (101) innerhalb der Schweißmaschine (102) angeordnet sind.

4. Vorrichtung gemäß einem der vorhergehenden Ansprüche,
wobei das Anschlagselement (103) nach dem Ausrichten der Enden der Mehrzahl von elektrischen Leitungen (101) an dem Anschlagselement (103) von der Mehrzahl von elektrischen Leitungen (101) wegbewegbar ist.

5. Vorrichtung gemäß einem der vorhergehenden Ansprüche,
ferner aufweisend ein Führungselement (104) angeordnet an der Führungseinheit (105),
wobei das Führungselement (104) konfiguriert ist die Enden der Mehrzahl von elektrischen Leitungen (101) nach dem Anordnen an dem Anschlagselement (103) einzuklemmen.

6. Vorrichtung gemäß Anspruch 5,
wobei das Führungselement (104) eine erste Ausnehmung (106) zum Aufnehmen der Mehrzahl von elektrischen Leitungen (101) aufweist, welche erste Ausnehmung (106) einen Führungskanal durch das Führungselement (104) für die Mehrzahl von elektrischen Leitungen (101) ausbildet.

7. Vorrichtung gemäß einem der Ansprüche 5 oder 6,
wobei das Führungselement (104) derart konfiguriert ist, dass die Mehrzahl von elektrischen Leitungen (101) automatisch einklemmbar ist.

8. Vorrichtung gemäß einem der Ansprüche 5 bis 7,
wobei das Führungselement (104) eine zweite Ausnehmung (107) aufweist, konfiguriert zum Aufnehmen eines Fingers eines Benutzers zur manuellen Unterstützung der Mehrzahl von elektrischen Leitungen (101).

9. Vorrichtung gemäß einem der vorhergehenden Ansprüche,
wobei das Anschlagselement (103) ein transparentes Material aufweist.

10. Vorrichtung gemäß einem der vorhergehenden Ansprüche,
wobei das Anschlagselement (103) zumindest drei aneinander angrenzende Flächen (109) zur Aufnahme der Enden der Mehrzahl von elektrischen Leitungen (101) aufweist, welche einen teilweise geöffneten Raum aufspannen ähnlich einem Schweißraum in der Schweißmaschine.

11. Vorrichtung gemäß einem der vorhergehenden Ansprüche, ferner aufweisend
eine Sensoreinrichtung, welche konfiguriert ist, zu Detektieren, ob die Enden der Mehrzahl von elektrischen Leitungen (101) in der bestimmungsgemäßen Schweißposition angeordnet sind.

12. Vorrichtung gemäß Anspruch 11, ferner aufweisend
eine Steuerung, konfiguriert, um ein Schweißen der Enden der Mehrzahl von elektrischen Leitungen (101) in der Schweißmaschine (102) automatisch auszulösen, wenn über die Sensoreinrichtung detektiert wurde, dass die Enden der Mehrzahl von elektrischen Leitungen (101) in der bestimmungsgemäßen Schweißposition angeordnet sind.

13. Verfahren zum Positionieren von Enden von einer Mehrzahl von elektrischen Leitungen (101) in einer Schweißmaschine (102), aufweisend:
Führen der Enden der Mehrzahl von elektrischen Leitungen (101) mittels einer Führungseinheit (105) in Richtung eines Anschlagselementes (103),
Ausrichten der Enden der Mehrzahl von elektrischen Leitungen (101) an dem Anschlagselement (103),
Einbringen der Enden der Mehrzahl von elektrischen Leitungen (101) in der Schweißmaschine (102) an einer bestimmungsgemäßen Schweißposition mittels der Führungseinheit (105).

14. Schweißmaschine zum Verschweißen einer Mehrzahl von elektrischen Leitungen (101) umfassend eine Vorrichtung (100) gemäß einem der Ansprüche 1 bis 12.
